# DEMANDE DE BREVET EUROPEEN

(11) **EP 4 579 970 A1**
(43) Date de publication de la demande: **02.07.2025**
(21) Numéro de dépôt: 24220319.8
(22) Date de dépôt: 16.12.2024
(51) Int. Cl.: H02H 3/093, H02H 3/087, H01H 39/00, H02H 7/26

(54) **CIRCUIT ÉLECTRIQUE MUNI DE DEUX INTERRUPTEURS PYROTECHNIQUES PERMETTANT D'ISOLER ÉLECTRIQUEMENT UNE SECTION LORS D'UNE APPARITION D'UN DÉFAUT DE TYPE COURT-CIRCUIT**

(30) Priorité: 22.12.2023 FR 2315172
(71) Demandeur: Safran Electrical & Power, 31702 Blagnac (FR)
(72) Inventeur: GUILLARD, Eric, 77550 MOISSY-CRAMAYEL (FR); PORTE, Guillaume, 77550 MOISSY-CRAMAYEL (FR)
(74) Mandataire: Germain Maureau

(57) **Abrégé**

Circuit électrique (100) d'un aéronef comprenant une alimentation électrique (4) relié électriquement à une charge électrique (31) au moyen d'un élément conducteur (7), et un élément de protection électrique principal (6)
caractérisé en ce qu'il comprend un premier interrupteur pyrotechnique (1) muni d'au moins un premier élément initiateur (11) et d'au moins un premier élément mécanique de coupure (12), et un deuxième interrupteur pyrotechnique (2) muni d'au moins un deuxième élément initiateur (21) et d'au moins un deuxième élément mécanique de coupure (22)
le premier élément initiateur (11) et le deuxième élément initiateur (21) étant chacun positionnés électriquement en parallèle de l'au moins un élément de protection électrique principal (6).

## Description

### Domaine Technique

L'invention concerne le domaine des circuits électriques et plus particulièrement un circuit électrique pour une alimentation d'au moins une charge électrique d'un aéronef.

### Etat de la technique antérieure

Dans le présent exposé, le terme « aéronef » désigne un ensemble des appareils capables de se diriger dans les airs comme par exemple les avions conventionnels également désignés par l'acronyme CTOL (Convention Take Off and Landing), les engins à décollage et atterrissage vertical désignés par l'acronyme VTOL (vertical take off and landing), et les engins à décollage et atterrissage courts désignés par l'acronyme STOL (Short take off and landing).

Il est connu que les aéronefs comprennent une charge électrique, c'est-à-dire un dispositif consommateur d'électricité en fonctionnement normal. Par exemple, la charge électrique peut être une propulsion électrique comprenant au moins un moteur électrique.

La propulsion électrique est alimentée par un circuit électrique fournissant un courant électrique haute tension continu, par exemple supérieure à 800V.

Il est connu que le circuit électrique comprenne au moins une alimentation électrique, au moins un boitier de distribution et au moins un harnais de distribution.

L'alimentation électrique correspond à un générateur électrique comme par exemple une batterie.

Le boitier de distribution comprend au moins un élément de commutation, par exemple un contacteur, permettant de mettre sous tension ou hors tension le harnais de distribution et donc finalement la propulsion électrique.

Le harnais de distribution, comprenant au moins un élément conducteur comme par exemple un câble électrique, achemine l'énergie électrique du boitier de distribution jusqu'à la propulsion électrique.

Dans la suite de la description, l'amont et l'aval sont définis par rapport à un sens d'alimentation normal de la charge électrique (de l'amont vers l'aval), c'est-à-dire de l'alimentation électrique vers la charge électrique.

Enfin, le circuit électrique est protégé électriquement en cas d'une apparition un défaut de type court-circuit par au moins une protection électrique comme par exemple un fusible. Cette protection électrique peut être positionnée par exemple au niveau du boitier de distribution, en aval de l'élément de commutation et en amont du harnais de distribution.

Un agencement des différents éléments du circuit électrique est appelé l'architecture du circuit électrique.

Avec une telle architecture, lorsque d'un défaut de type court-circuit apparait dans le harnais de distribution, la protection électrique permet de couper un lien électrique entre l'alimentation électrique et la propulsion électrique, de sorte à protéger le harnais de distribution contre une dégradation liée au défaut.

Cependant, lorsque la charge électrique est réversible, celle-ci peut alors devenir générateur et venir réalimenter le défaut de court-circuit. Cela est particulièrement vrai lorsque la charge électrique est un moteur électrique. Dans ce cas, la réalimentation du défaut électrique par le moteur électrique qui devient générateur est également appelée l'effet windmilling.

La réalimentation du défaut électrique de court-circuit présente un danger pour la sécurité de l'aéronef. En effet, il peut être en mesure de dégrader l'intégrité de l'aéronef comme par exemple de perforer une cloison d'une aile.

Pour éviter de réalimenter le défaut de court-circuit comme décrit ci-dessus, une protection électrique additionnelle doit être ajoutée entre le harnais de distribution et la charge électrique. Cette protection électrique additionnelle doit être rapide et la moins dissipative possible. Enfin, une intégration physique de cette protection électrique additionnelle dans l'aéronef présente également des difficultés.

L'invention a donc pour but de proposer une architecture d'un circuit électrique pour alimenter une charge électrique d'un aéronef qui permette d'éviter une réalimentation d'un défaut de type court-circuit tout en étant facilement intégrable dans un aéronef.

### Exposé de l'invention

Un mode de réalisation concerne un circuit électrique pour une alimentation d'au moins une charge électrique d'un aéronef, le circuit électrique comprenant au moins une alimentation électrique relié électriquement à l'au moins une charge électrique au moyen d'au moins un élément conducteur, et au moins un élément de protection électrique principal positionné entre l'au moins une alimentation électrique et un point amont d'une section de l'au moins un élément conducteur à protéger lors d'une apparition d'un défaut électrique, caractérisé en ce que le circuit électrique comprend au moins un premier interrupteur pyrotechnique muni d'au moins un premier élément initiateur et d'au moins un premier élément mécanique de coupure qui est configuré pour réaliser une coupure électrique de l'au moins un élément conducteur entre l'au moins une alimentation électrique et le point amont de la section à protéger, et au moins un deuxième interrupteur pyrotechnique muni d'au moins un deuxième élément initiateur et d'au moins un deuxième élément mécanique de coupure qui est configuré pour réaliser une coupure électrique de l'au moins un élément conducteur entre un point aval de la section à protéger et la charge électrique, le premier élément initiateur et le deuxième élément initiateur étant chacun positionnés électriquement en parallèle de l'au moins un élément de protection électrique principal.

L'au moins une charge électrique correspond à un dispositif consommateur d'électricité en fonctionnement normal. Par exemple, la charge électrique peut être une propulsion électrique comprenant au moins un moteur électrique devant être alimenté par un courant électrique haute tension continu, par exemple supérieure à 800Vdc.

L'alimentation électrique est un élément qui fournit l'énergie électrique au circuit électrique. L'alimentation électrique comprend un générateur électrique comme par exemple une batterie.

L'élément conducteur est configuré pour faire circuler un courant électrique permettant d'alimenter électriquement la charge électrique. L'élément conducteur comprend une section à protéger lors d'une apparition d'un défaut électrique, par exemple de type court-circuit. Autrement dit, il s'agit d'une section devant être isolée électriquement suite à l'apparition du défaut électrique dans ladite section. Ladite section est comprise entre un point amont et un point aval.

Dans la suite de la description, l'amont et l'aval sont définis par rapport à un sens d'alimentation normal de la charge électrique (de l'amont vers l'aval), c'est-à-dire de l'alimentation électrique vers la charge électrique.

L'élément de protection électrique principal est configuré, dans un état enclenché, pour faire passer le courant l'électrique permettant d'alimenter électriquement la charge électrique, et pour être dans un état déclenché lors d'une apparition du défaut électrique dans la section à protéger de l'élément conducteur. L'état enclenché est l'état de l'élément de protection électrique principal lors d'un fonctionnement normal du circuit électrique. Le positionnement de l'élément de protection électrique principal entre l'alimentation électrique et le point amont de la section à protéger permet à l'élément de protection électrique principal d'être soumis au courant de court-circuit. L'élément de protection électrique principal est dans l'état déclenché lorsque le courant électrique à ses bornes est supérieur à un courant électrique maximum.

Les interrupteurs pyrotechniques peuvent être dans un état fermé dans lequel ils laissent passer le courant électrique dans l'élément conducteur, ou dans un état ouvert dans lequel le courant électrique ne peut plus passer dans l'élément conducteur. L'état fermé est l'état des interrupteurs pyrotechniques lors du fonctionnement normal du circuit électrique. Les interrupteurs pyrotechniques ne sont dans un état ouvert que lors d'une apparition d'un défaut électrique.

Les interrupteurs pyrotechniques comprennent chacun un élément initiateur et un élément mécanique de coupure.

La charge pyrotechnique commandée par l'élément initiateur est dans un état nominal tant qu'une tension électrique à ses bornes est inférieure à une tension de déclenchement. L'état nominal est l'état de l'élément initiateur lors du fonctionnement normal du circuit électrique. La charge pyrotechnique commandée par l'élément initiateur est dans un état déclenché lorsque la tension à ses bornes est devenue supérieure ou égale à la tension de déclenchement pendant au moins un instant, comme par exemple lors de l'apparition du défaut électrique. Il faut une certaine durée, appelée temps de réponse du déclenchement, pour que l'élément initiateur passe de l'état nominal à l'état déclenché.

Dans certains modes de réalisation, la tension de déclenchement du premier élément initiateur est égale à la tension de déclenchement du deuxième élément initiateur.

L'élément mécanique de coupure est un élément mobile, par exemple en translation, configuré pour réaliser une coupure électrique de l'élément conducteur. L'élément mécanique de coupure peut être dans un état nominal ou dans un état actionné. L'état nominal est l'état de l'élément mécanique de coupure lors du fonctionnement normal du circuit électrique. L'élément mécanique de coupure est dans un état actionné lorsque l'élément initiateur est passé dans un état déclenché. Il faut une certaine durée, appelée temps de réponse mécanique, pour que l'élément mécanique de coupure passe de l'état nominal à l'état actionné. L'élément mécanique de coupure coupe l'élément conducteur au niveau du positionnement de l'interrupteur pyrotechnique. Autrement dit, comme le premier élément mécanique de coupure coupe l'élément conducteur entre l'alimentation électrique et le point amont de la section à protéger, le premier interrupteur pyrotechnique est positionné entre l'alimentation électrique et le point amont de la section à protéger, et comme le deuxième élément mécanique de coupure coupe l'élément conducteur entre le point aval de la section à protéger et la charge électrique, le deuxième interrupteur pyrotechnique est positionné entre le point aval de la section à protéger et la charge électrique.

Le premier interrupteur et le deuxième interrupteur sont mécaniquement positionnés en série le long de l'élément conducteur. Ce positionnement électrique permet d'augmenter le pouvoir de coupure de chaque interrupteur pyrotechnique de sorte que le premier interrupteur pyrotechnique et le deuxième interrupteur pyrotechnique peuvent être dimensionnés avec une tension de service correspondant à une moitié de la tension de l'alimentation électrique qui est appliquée à la charge électrique.

Lorsque la charge pyrotechnique commandée par l'élément initiateur est dans l'état nominal, l'élément mécanique de coupure est également dans l'état nominal et l'interrupteur pyrotechnique est dans l'état fermé.

Lorsque la charge pyrotechnique commandée par l'élément initiateur est dans l'état déclenché, l'élément mécanique de coupure est dans l'état actionné et l'interrupteur pyrotechnique est dans l'état ouvert.

L'élément mécanique de coupure est configuré pour couper un lien électrique au niveau du positionnement de l'interrupteur pyrotechnique dans le circuit électrique, lorsque l'élément mécanique de coupure est actionné par l'élément initiateur.

Dans le circuit électrique selon l'invention, le premier et le deuxième interrupteurs pyrotechniques sont configurés pour couper l'élément conducteur entre l'alimentation électrique et la charge électrique lors de l'apparition d'un défaut électrique de sorte à isoler la section à protéger. Plus particulièrement, le premier interrupteur pyrotechnique est configuré pour sectionner l'élément conducteur entre l'alimentation électrique et le point amont de la section à protéger, tandis que le deuxième interrupteur pyrotechnique est configuré pour sectionner l'élément conducteur entre le point aval de la section à protéger et la charge électrique.

Comme décrit ci-dessus, les interrupteurs pyrotechniques se positionnent dans l'état ouvert lorsque la tension aux bornes de l'élément initiateur est devenue supérieure ou égale à la tension de déclenchement de la charge pyrotechnique.

Selon l'invention, le premier élément initiateur et le deuxième élément initiateur sont chacun positionnés électriquement en parallèle de l'au moins un élément de protection électrique principal. Ainsi, la tension aux bornes du premier élément initiateur et du deuxième éléments initiateurs est identiques, et égale à la tension aux bornes de l'élément de protection électrique principal. De sorte que si la tension aux bornes de l'élément de protection électrique principal devient supérieure ou égale à la tension de déclenchement de la charge pyrotechnique, la tension aux bornes du premier élément initiateur et du deuxième élément initiateur devient également supérieure ou égale à la tension de déclenchement de sorte que le premier élément initiateur et le deuxième élément initiateur passe à l'état déclenché, entrainant le passage à l'état actionné des premier et deuxième éléments mécaniques de coupure, et finalement le passage à l'état ouvert des deux interrupteurs pyrotechniques. Ainsi, le circuit électrique selon l'invention ne comprend pas une électronique spécifique pour actionner les interrupteurs pyrotechniques. C'est directement un courant de surcharge lié au court-circuit qui induit le déclenchement des interrupteurs pyrotechniques.

Lors de l'apparition d'un défaut électrique dans la section à protéger, l'élément de protection électrique principal va détecter un courant de surcharge et passer à l'état déclenché. Au moins lors du passage de l'état enclenché à l'état déclenché, un arc électrique se forme aux bornes de l'élément de protection électrique principal. Ledit arc électrique entraine une tension aux bornes de l'élément de protection électrique principal supérieure ou égale à la tension de déclenchement des interrupteurs pyrotechniques, et donc également aux bornes du premier élément initiateur et du deuxième élément initiateur. Le premier élément initiateur et le deuxième élément initiateur passent donc à l'état déclenché, activant ainsi le premier et le deuxième éléments mécaniques de coupure qui passent donc à l'état actionné. Finalement, le premier et le deuxième interrupteurs pyrotechniques sont donc à l'état ouvert. La section de l'élément conducteur est donc électriquement séparé du circuit électrique, le défaut électrique est donc également isolé. Il n'y a plus de possibilité de réalimentation du défaut électrique par la charge électrique, c'est-à-dire même en cas d'effet windmilling.

L'invention peut également présenter une ou plusieurs des caractéristiques suivantes prises seules ou en combinaison.

Dans certains modes de réalisation, un temps de réponse d'un déclenchement de l'au moins un premier et de l'au moins un deuxième éléments initiateurs sont identiques.

Dans certains modes de réalisation, un temps de réponse mécanique de l'au moins un premier et de l'au moins un deuxième éléments mécaniques de coupure sont identiques.

Dans certains modes de réalisation, un temps de réponse d'un déclenchement de l'au moins un premier et de l'au moins un deuxième éléments initiateurs est inférieur à un temps de réponse mécanique de l'au moins un premier et de l'au moins un deuxième éléments mécaniques de coupure.

Lorsque l'arc électrique se forme aux bornes de l'élément de protection électrique principal, même si le premier élément initiateur reçoit la tension de déclenchement légèrement avant le deuxième élément initiateur, le premier élément mécanique de coupure ne passe à l'état actionné que lorsque le deuxième élément initiateur a reçu la tension de déclenchement. Ainsi, les deux éléments initiateurs sont déclenchés avant que l'un des éléments mécaniques ne passent à l'état actionné.

Dans certains modes de réalisation, l'au moins un premier élément initiateur et/ou l'au moins un deuxième élément initiateur comprend au moins une résistance électrique entourée d'une poudre ou d'un liquide pyrotechnique

Ainsi lorsque la résistance électrique reçoit une tension supérieure à celle de son déclenchement, la résistance s'échauffe en créant un arc électrique qui alimente la résistance électrique de l'initiateur conduisant au déclanchement de la poudre ou du liquide pyrotechnique. Dans certains modes de réalisation, l'au moins un premier élément mécanique de coupure et/ou l'au moins un deuxième élément mécanique de coupure comprend un piston de sectionnement. Lorsqu'il est activé, le piston de sectionnement est mobile en translation de sorte à venir couper ou sectionner l'élément conducteur. Le piston de sectionnement peut être activé par une détonation ou une déflagration de la charge pyrotechnique alimentée par l'élément initiateur.

Dans certains modes de réalisation, l'au moins un élément de protection électrique principal a une tension de service correspondant à une moitié de la tension de l'alimentation électrique qui est appliquée à la charge électrique.

Ainsi l'élément de protection électrique principal n'est pas configuré pour couper un lien électrique entre l'alimentation électrique et le point amont de la section à protéger. L'élément de protection électrique principal permet uniquement de créer un arc électrique qui va déclencher les éléments initiateurs. L'élément de protection électrique principal ne pouvant pas être dimensionné pour sectionner l'élément conducteur, l'élément de protection électrique principal présente une taille réduite permettant une intégration physique de l'élément de protection électrique principal plus facile dans l'aéronef.

Dans certains modes de réalisation, l'au moins un élément de protection électrique principal est un fusible.

Dans certains modes de réalisation, le circuit électrique comprend au moins une première résistance de réglage positionnée électriquement en série du premier élément initiateur et/ou au moins une deuxième résistance de réglage positionnée électriquement en série du deuxième élément initiateur.

La résistance de réglage permet de limiter une valeur du courant circulant dans l'élément initiateur.

Dans certains modes de réalisation, le circuit électrique comprend au moins un boitier de distribution muni d'au moins un élément de commutation.

Le boitier de distribution comprend au moins un élément de commutation, par exemple un contacteur, permettant de mettre sous tension ou hors tension l'élément conducteur et donc finalement la charge électrique.

Un autre aspect de l'invention concerne un aéronef comprenant une charge électrique alimenté par un circuit électrique selon l'invention.

### Brève description des dessins

L'invention sera mieux comprise, grâce à la description ci-après, qui se rapporte à un mode de réalisation selon la présente invention, donné à titre d'exemples non limitatif et expliqué avec référence aux dessins schématiques annexés, dans lesquels :
[FIG. 1] est une représentation schématique d'un circuit électrique selon l'invention ;
[FIG. 2] est la représentation schématique du circuit électrique de la figure 1 dans lequel un défaut électrique apparait au niveau d'un élément conducteur ;
[FIG. 3] est la représentation schématique du circuit électrique de la figure 2 dans lequel un élément de protection électrique principal passe dans un état déclenché ;
[FIG. 4] est la représentation schématique du circuit électrique de la figure 3 dans lequel un arc électrique apparait au niveau de l'élément de protection électrique principal ;
[FIG. 5] est la représentation schématique du circuit électrique de la figure 4 dans lequel un premier interrupteur pyrotechnique et un deuxième interrupteur pyrotechnique passe dans un état ouvert ;
[FIG. 6] est la représentation schématique du circuit électrique de la figure 5 dans lequel une section de l'élément conducteur est isolé électriquement;
[FIG. 7] est la représentation schématique d'un interrupteur pyrotechnique du circuit électrique de la figure 1 à l'état fermé ;
[FIG. 8] est la représentation schématique de l'interrupteur pyrotechnique de la figure 7 à l'état ouvert ;

### Description des modes de réalisation

Dans la suite de la description, l'amont et l'aval sont définis par rapport à un sens d'alimentation normal de la charge électrique (de l'amont vers l'aval), c'est-à-dire d'une alimentation électrique HV-, HV+ vers une charge électrique 31.

Seuls les éléments nécessaires à la compréhension de l'invention ont été représentés. Pour faciliter la lecture des dessins, les mêmes éléments portent les mêmes références d'une figure à l'autre.

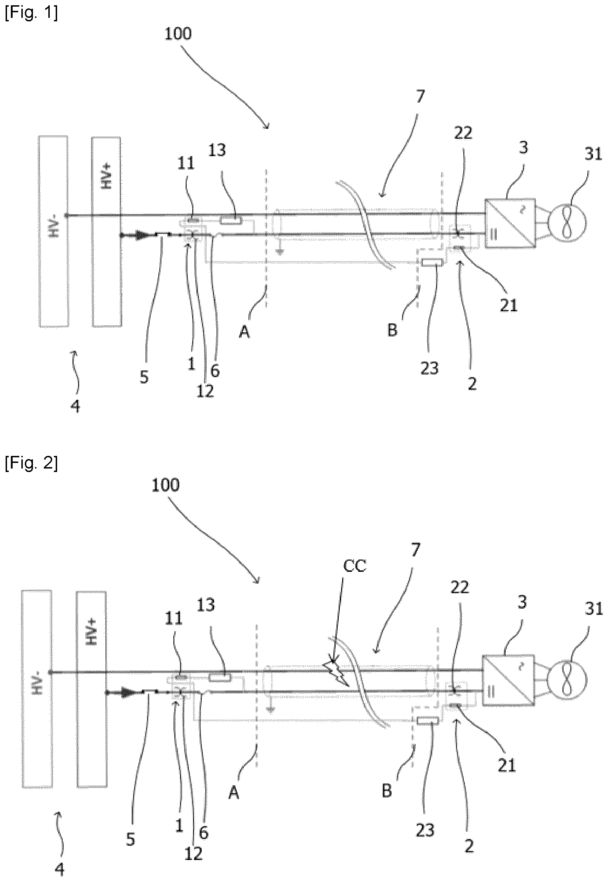

La figure 1 porte sur une représentation schématique d'un circuit électrique 100 selon l'invention. Ledit circuit électrique 100 comprend une alimentation électrique 4 haute tension HV-, HV+ qui est un élément qui fournit l'énergie électrique au circuit électrique 100. L'alimentation électrique 4 comprend un générateur électrique comme par exemple une batterie, qui fournit un courant électrique haute tension continu, par exemple supérieure à 800V.

Ledit circuit électrique 100 comprend une charge électrique 31 qui correspond à un dispositif consommateur d'électricité en fonctionnement normal. Sur la figure 1, la charge électrique 31 est une propulsion électrique comprenant un moteur électrique 31 couplé à un onduleur 3 qui transforme le courant électrique haute tension continu en un courant alternatif.

Le courant électrique circule entre l'alimentation électrique 4 et la charge électrique 31 au moyen d'un élément conducteur 7. L'élément conducteur 7 comprend une section à protéger A-B lors d'une apparition d'un défaut électrique CC, par exemple de type court-circuit. Autrement dit, il s'agit de la section A-B devant être isolée électriquement suite à l'apparition du défaut électrique CC dans ladite section A-B comme illustré en figure 2. Ladite section A-B est comprise entre un point amont A et un point aval B.

Dans le mode de réalisation illustré à la figure 1, le circuit électrique 100 comprend un boitier de distribution muni d'un élément de commutation 5, par exemple un contacteur, permettant de mettre sous tension ou hors tension l'élément conducteur 7 et donc finalement la charge électrique 31.

Le circuit électrique 100 comprend un élément de protection électrique principal 6 positionné entre l'alimentation électrique 4 et le point amont de la section à protéger A-B. L'élément de protection électrique principal 4 est configuré, dans un état enclenché, pour faire passer le courant l'électrique permettant d'alimenter électriquement la charge électrique 31, et pour être dans un état déclenché lors de l'apparition du défaut électrique CC dans la section à protéger A-B de l'élément conducteur 7. L'élément de protection électrique principal 4 est dans l'état déclenché lorsque le courant électrique à ses bornes est supérieur à un courant électrique maximum.

L'état enclenché est l'état de l'élément de protection électrique principal 6 lors d'un fonctionnement normal du circuit électrique 100. L'élément de protection électrique principal 6 est positionné entre l'alimentation électrique 4 et le point amont A de la section à protéger A-B, de sorte que l'élément de protection électrique principal 6 est soumis au courant de court-circuit lors de l'apparition du défaut électrique CC dans la section à protéger A-B de l'élément conducteur 7.

Dans certains modes de réalisation, l'élément de protection électrique principal 6 a un pouvoir de coupure inférieur à une valeur d'un courant de court-circuit. Ainsi l'élément de protection électrique principal 6 n'est pas configuré pour couper un lien électrique entre l'alimentation électrique 4 et le point amont A de la section à protéger A-B. L'élément de protection électrique principal 6 permet uniquement de créer un arc électrique 61 qui va déclencher des interrupteurs pyrotechniques 1, 2. L'élément de protection électrique principal 6 ne devant pas être dimensionné pour sectionner l'élément conducteur 7, l'élément de protection électrique principal 6 présente une taille réduite permettant une intégration physique de l'élément de protection électrique principal 6 plus facile dans un aéronef.

Dans le mode de réalisation de la figure 1, l'élément de protection électrique principal 6 est un fusible.

Le circuit électrique 100 comprend également un premier interrupteur pyrotechnique 1 muni d'un premier élément initiateur 11 et d'un premier élément mécanique de coupure 12 qui est configuré pour réaliser une coupure électrique de l'élément conducteur 7 entre l'alimentation électrique 4 et le point amont A de la section à protéger A-B, et un deuxième interrupteur pyrotechnique 2 muni d'un deuxième élément initiateur 21 et d'un deuxième élément mécanique de coupure 22 qui est configuré pour réaliser une coupure électrique de l'élément conducteur 7 entre un point aval B de la section à protéger A-B et la charge électrique 31.

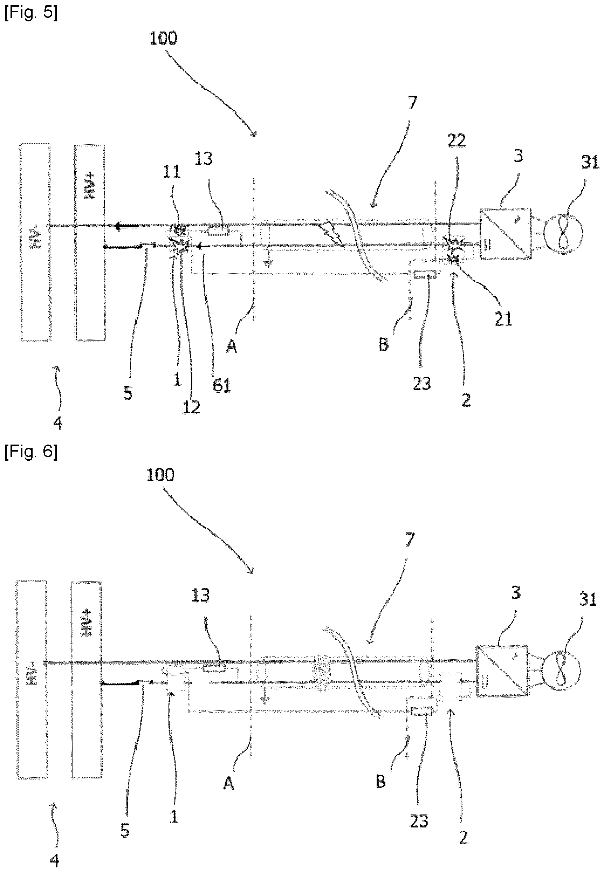

Les interrupteurs pyrotechniques 1,2 peuvent être dans un état fermé, comme sur les figures 1 à 4 et 7, dans lequel ils laissent passer le courant électrique dans l'élément conducteur 7, ou dans un état ouvert, comme sur les figures 5, 6 et 8, dans lequel le courant électrique ne peut plus passer dans l'élément conducteur 7. L'état fermé est l'état des interrupteurs pyrotechniques 1, 2 lors du fonctionnement normal du circuit électrique 100. Les interrupteurs pyrotechniques 1, 2 ne sont dans un état ouvert que lors de l'apparition du défaut électrique CC.

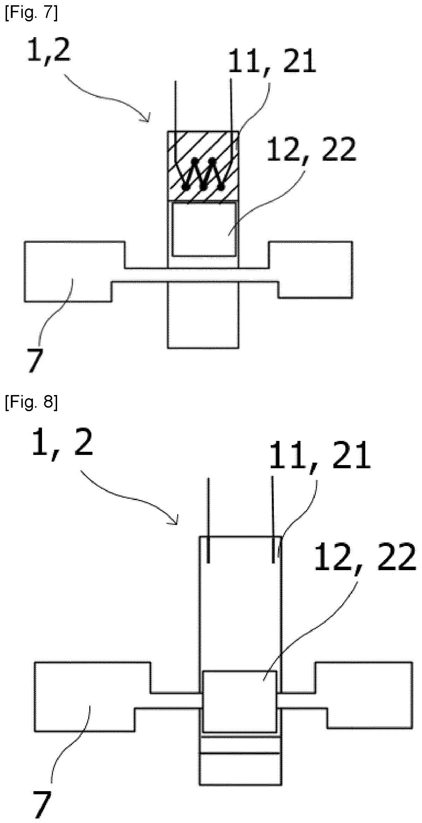

Les interrupteurs pyrotechniques 1, 2 vont être plus précisément décrits en référence aux figures 7 et 8.

Les interrupteurs pyrotechniques 1, 2 comprennent chacun un élément initiateur 11, 21 et un élément mécanique de coupure 12, 22.

Dans le mode de réalisation de la figure 7, l'élément initiateur 11, 21 comprend au moins une résistance électrique entourée d'une poudre ou d'un liquide pyrotechnique.

L'élément initiateur 11, 21 est dans un état nominal, comme illustré sur la figure 7, tant qu'une tension électrique à ses bornes est inférieure à une tension de déclenchement. L'état nominal est l'état de l'élément initiateur 11, 21 lors du fonctionnement normal du circuit électrique 100. L'élément initiateur 11, 21 est dans un état déclenché, comme illustré à la figure 8, lorsque la tension à ses bornes est devenue supérieure ou égale à la tension de déclenchement pendant au moins un instant, comme par exemple lors de l'apparition du défaut électrique CC. Il faut une certaine durée, appelée temps de réponse du déclenchement, pour que l'élément initiateur 11, 21 passe de l'état nominal à l'état déclenché.

Dans certains modes de réalisation, un temps de réponse d'un déclenchement du premier 11 et du deuxième 21 éléments initiateurs sont identiques.

Dans certains modes de réalisation, la tension de déclenchement du premier élément initiateur 11 est égale à la tension de déclenchement du deuxième élément initiateur 21.

Ainsi lorsque l'élément initiateur 11, 21 reçoit une tension supérieure ou égale à la tension de déclenchement à ses bornes, l'élément initiateur 11, 21, ici une résistance électrique, s'échauffe, ce qui actionne la poudre ou le liquide pyrotechnique.

Le premier élément initiateur 11 et le deuxième élément initiateur 21 sont chacun positionnés électriquement en parallèle de l'élément de protection électrique principal 6.

Dans le mode de réalisation illustré en figure 1, le circuit électrique 100 comprend une première résistance de réglage 13 positionnée électriquement en série du premier élément initiateur 11 et une deuxième résistance de réglage 23 positionnée électriquement en série du deuxième élément initiateur 21.

Les résistances de réglage 13, 23 permettent de limiter une valeur du courant circulant dans l'élément initiateur 11, 21.

L'élément mécanique de coupure 12, 22 est un élément mobile configuré pour réaliser une coupure électrique de l'élément conducteur 7. Dans le mode de réalisation illustré aux figures 7, 8, l'élément mécanique de coupure 12, 22 comprend un piston de sectionnement.

Lorsque l'élément mécanique de coupure 12, 22 est activé, comme sur la figure 8, le piston de sectionnement, mobile en translation, vient couper ou sectionner l'élément conducteur 7. Le piston de sectionnement peut être activé par une détonation ou une déflagration de l'élément initiateur 11, 21.

L'élément mécanique de coupure 12, 22 peut être dans un état nominal ou dans un état actionné. L'état nominal, illustré aux figures 1 à 3, et 7, est l'état de l'élément mécanique de coupure 12, 22 lors du fonctionnement normal du circuit électrique 100. L'élément mécanique de coupure 12, 22 est dans un état actionné, comme illustré aux figures 5, 6 et 8 lorsque l'élément initiateur 11, 21 est passé dans un état déclenché. Il faut une certaine durée, appelée temps de réponse mécanique, pour que l'élément mécanique de coupure 12, 22 passe de l'état nominal à l'état actionné. L'élément mécanique de coupure 12, 22 coupe l'élément conducteur 7 au niveau du positionnement de l'interrupteur pyrotechnique 1, 2. Comme le premier élément mécanique de coupure 12 coupe l'élément conducteur 7 entre l'alimentation électrique 4 et le point amont A de la section à protéger A-B, le premier interrupteur pyrotechnique 1 est positionné entre l'alimentation électrique 4 et le point amont A de la section à protéger A-B, et comme le deuxième élément mécanique de coupure 22 coupe l'élément conducteur 7 entre le point aval B de la section à protéger A-B et la charge électrique 31, le deuxième interrupteur pyrotechnique 2 est positionné entre le point aval B de la section à protéger A-B et la charge électrique B. Le premier interrupteur 1 et le deuxième interrupteur 2 sont mécaniquement positionnés en série le long de l'élément conducteur 7. Ce positionnement électrique permet d'augmenter le pouvoir de coupure de chaque interrupteur pyrotechnique 1, 2 de sorte que le premier interrupteur pyrotechnique 1 et le deuxième interrupteur pyrotechnique 2 peuvent être dimensionnés avec une tension de service correspondant à une moitié de la tension de l'alimentation électrique qui est appliquée à la charge électrique 31.

Dans certains modes de réalisation, le temps de réponse mécanique de l'au moins un premier 12 et de l'au moins un deuxième 22 éléments mécaniques de coupure sont identiques.

Lorsque l'élément initiateur 11, 21 est dans l'état nominal, l'élément mécanique de coupure 12, 22 est également dans l'état nominal et l'interrupteur pyrotechnique 1, 2 est dans l'état fermé.

Lorsque l'élément initiateur 11, 21 est dans l'état déclenché, l'élément mécanique de coupure 12, 22 est dans l'état actionné et l'interrupteur pyrotechnique 1, 2 est dans l'état ouvert.

Comme décrit ci-dessus, les interrupteurs pyrotechniques 1, 2 se positionnent dans l'état ouvert lorsque la tension aux bornes de l'élément initiateur 11, 21 est devenue supérieure ou égale à la tension de déclenchement.

Un fonctionnement des interrupteurs pyrotechniques 1, 2 lors de l'apparition d'un défaut électrique CC va être décrit en référence aux figures 1 à 6.

La figure 1 illustre un fonctionnement normal du circuit électrique 100 selon l'invention, dans lequel l'alimentation électrique 4 alimente la charge électrique 31. Lors du fonctionnement normal, l'élément de commutation 5 est dans un état fermé de sorte à faire passer le courant électrique dans l'élément conducteur 7. En outre, le premier interrupteur pyrotechnique 1 et le deuxième interrupteur pyrotechnique 2 sont dans un état fermé, et l'élément de protection principal 6 est dans un état enclenché.

La figure 2 illustre l'apparition du défaut électrique CC dans l'élément conducteur 7, et plus précisément dans la section à protéger A-B de l'élément conducteur 7.

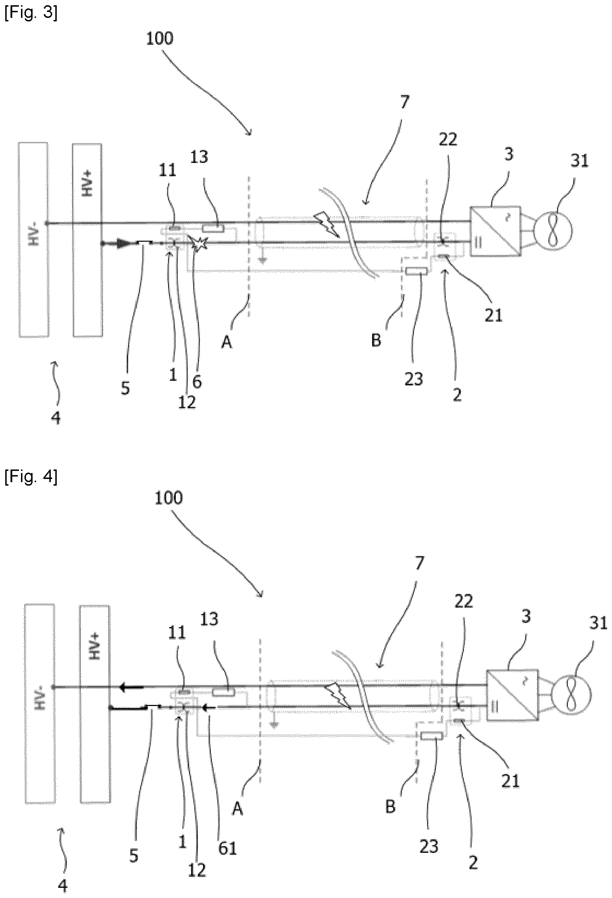

Le défaut électrique CC entraine une augmentation du courant électrique circulant dans l'élément conducteur 7 de sorte à au moins atteindre la valeur du courant électrique maximum de l'élément de protection électrique principal 6 et à entrainer un passage à l'état déclenché de l'élément de protection électrique principal 6 comme illustré sur la figure 3.

Le passage à l'état déclenché de l'élément de protection électrique principal 6 entraine la formation d'un arc électrique 61 entre ses bornes comme illustré en figure 4.

L'arc électrique 61 entraine une tension aux bornes du premier élément initiateur 11 et du deuxième élément initiateur 21, qui sont chacun positionnés électriquement en parallèle de l'élément de protection électrique principal 6, supérieur ou égale à la tension de déclenchement du premier élément initiateur 11 et du deuxième élément initiateur 21. Ainsi le premier élément initiateur 11 et le deuxième élément initiateur 21 passe à l'état déclenché, entrainant le passage à l'état actionné des premier 12 et deuxième 22 éléments mécaniques de coupure, et donc finalement le passage à l'état ouvert des deux interrupteurs pyrotechniques 1, 2, comme illustré en figure 5.

Finalement, le premier 1 et le deuxième 2 interrupteurs pyrotechniques sont donc à l'état ouvert, comme illustré en figure 6. La section A-B de l'élément conducteur 7 est donc électriquement séparé du circuit électrique 100, le défaut électrique CC est donc également isolé. Il n'y a plus de possibilité de réalimentation du défaut électrique CC par la charge électrique 31, c'est-à-dire même en cas d'effet windmilling.

Dans certains modes de réalisation, un temps de réponse d'un déclenchement de l'au moins un premier 11 et de l'au moins un deuxième 21 éléments initiateurs est inférieur à un temps de réponse mécanique de l'au moins un premier 12 et de l'au moins un deuxième 22 éléments mécaniques de coupure. Ainsi, lorsque l'arc électrique 61 se forme aux bornes de l'élément de protection électrique principal 6, même si le premier élément initiateur 11 reçoit la tension de déclenchement légèrement avant le deuxième élément initiateur 21, le premier élément mécanique de coupure 12 ne passe à l'état actionné que lorsque le deuxième élément initiateur 21 a reçu la tension de déclenchement. Ainsi, les deux éléments initiateurs 11, 21 sont déclenchés avant que l'un des éléments mécaniques de coupure 12, 22 ne passent à l'état actionné.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Circuit électrique (100) pour une alimentation d'au moins une charge électrique (31) d'un aéronef, le circuit électrique (100) comprenant au moins une alimentation électrique (4) relié électriquement à l'au moins une charge électrique (31) au moyen d'au moins un élément conducteur (7), et au moins un élément de protection électrique principal (6) positionné entre l'au moins une alimentation électrique (4) et un point amont (A) d'une section (A-B) de l'au moins un élément conducteur (7) à protéger lors d'une apparition d'un défaut électrique (CC),
**caractérisé en ce que** le circuit électrique (100) comprend au moins un premier interrupteur pyrotechnique (1) muni d'au moins un premier élément initiateur (11) et d'au moins un premier élément mécanique de coupure (12) qui est configuré pour réaliser une coupure électrique de l'au moins un élément conducteur (7) entre l'au moins une alimentation électrique (4) et le point amont (A) de la section à protéger (A-B),
et au moins un deuxième interrupteur pyrotechnique (2) muni d'au moins un deuxième élément initiateur (21) et d'au moins un deuxième élément mécanique de coupure (22) qui est configuré pour réaliser une coupure électrique de l'au moins un élément conducteur (7) entre un point aval (B) de la section à protéger (A-B) et la charge électrique (31),
le premier élément initiateur (11) et le deuxième élément initiateur (21) étant chacun positionnés électriquement en parallèle de l'au moins un élément de protection électrique principal (6).

2. Circuit électrique (100) selon la revendication 1, dans lequel un temps de réponse d'un déclenchement de l'au moins un premier (11) et de l'au moins un deuxième (21) éléments initiateurs est inférieur à un temps de réponse mécanique de l'au moins un premier (12) et de l'au moins un deuxième (22) éléments mécaniques de coupure.

3. Circuit électrique (100) selon l'une quelconque des revendications précédentes, dans lequel l'au moins un premier élément initiateur (11) et/ou l'au moins un deuxième élément initiateur (21) comprend au moins une résistance électrique entourée d'une poudre ou d'un liquide pyrotechnique

4. Circuit électrique (100) selon l'une quelconque des revendications précédentes, dans lequel l'au moins un premier élément mécanique de coupure (12) et/ou l'au moins un deuxième élément mécanique de coupure (22) comprend un piston de sectionnement.

5. Circuit électrique (100) selon l'une quelconque des revendications précédentes, dans lequel l'au moins un élément de protection électrique principal (6) a une tension de service correspondant à une moitié de la tension de l'alimentation électrique qui est appliquée à la charge électrique.

6. Circuit électrique (100) selon l'une quelconque des revendications précédentes, comprenant au moins une première résistance de réglage (13) positionnée électriquement en série du premier élément initiateur (11) et/ou au moins une deuxième résistance de réglage (23) positionnée électriquement en série du deuxième élément initiateur (21).

7. Circuit électrique (100) selon l'une quelconque des revendications précédentes, comprenant au moins un boitier de distribution muni d'au moins un élément de commutation (5).

8. Aéronef comprenant une charge électrique (31) alimenté par un circuit électrique (100) selon l'une quelconque des revendications précédentes.
